# FASCICULE DE BREVET EUROPEEN

(11) **EP 2 459 360 B1**
(45) Date de publication et mention de la délivrance du brevet: **19.12.2018**
(21) Numéro de dépôt: 09736281.8
(22) Date de dépôt: 31.07.2009
(51) Int. Cl.: B29C 65/40, B29C 53/38, B65B 51/02, B29C 53/48

(54) **PROCÉDÉ ET DISPOSITIF POUR SOUDER UN EMBALLAGE PLASTIQUE TUBULAIRE ET EMBALLAGE AINSI OBTENU**
VERFAHREN UND VORRICHTUNG ZUR VERSIEGELUNG EINER ROHRFÖRMIGEN KUNSTSTOFFVERPACKUNG UND AUF DIESE WEISE HERGESTELLTE VERPACKUNG
METHOD AND DEVICE FOR SEALING TUBULAR PLASTIC PACKAGING, AND RESULTING PACKAGING

(43) Date de publication de la demande: 06.06.2012
(73) Titulaire: Aisapack Holding SA, 1896 Vouvry (CH)
(72) Inventeur: KELLER, Gerhard, CH-1896 Vouvry (CH); THOMASSET, Jacques, CH-1896 Vouvry (CH)
(74) Mandataire: Grosfillier, Philippe
(86) Numéro de dépôt international: PCT/IB2009/053346
(87) Numéro de publication internationale: WO 2011/012930

(56) Documents cités:
- WO-A2-2008/038206
- CH-A- 404 944
- DE-A1- 2 008 085
- GB-A- 1 198 260
- GB-A- 1 468 256
- JP-A- 8 324 600
- US-A- 3 066 063

## Description

### Domaine de l'invention

L'invention se situe dans le domaine des tubes flexibles formés au moyen de films plastiques. Elle concerne plus précisément un tube flexible formé à partir d'un film dont les extrémités sont soudées grâce à l'ajout d'un cordon de soudure à l'état fondu.

### Etat de la technique

Le soudage par ajout d'un cordon de matière plastique fondu est décrit dans la demande de brevet WO 2008/038206 A2. Dans ce procédé déposé par la demanderesse, le cordon de soudure est extrudé et soudé sur chaque extrémité du laminé et sert de liaison entre lesdites extrémités. La température du cordon de soudure est suffisante pour assurer son soudage sur lesdites extrémités de sorte qu'aucun apport d'énergie supplémentaire n'est nécessaire. Le procédé présente l'avantage d'améliorer l'esthétique des tubes car le cordon est appliqué sur la surface formant la face interne de l'emballage. Un autre avantage réside dans la simplicité du dispositif en comparaison aux dispositifs de soudage à haute fréquence généralement utilisés.

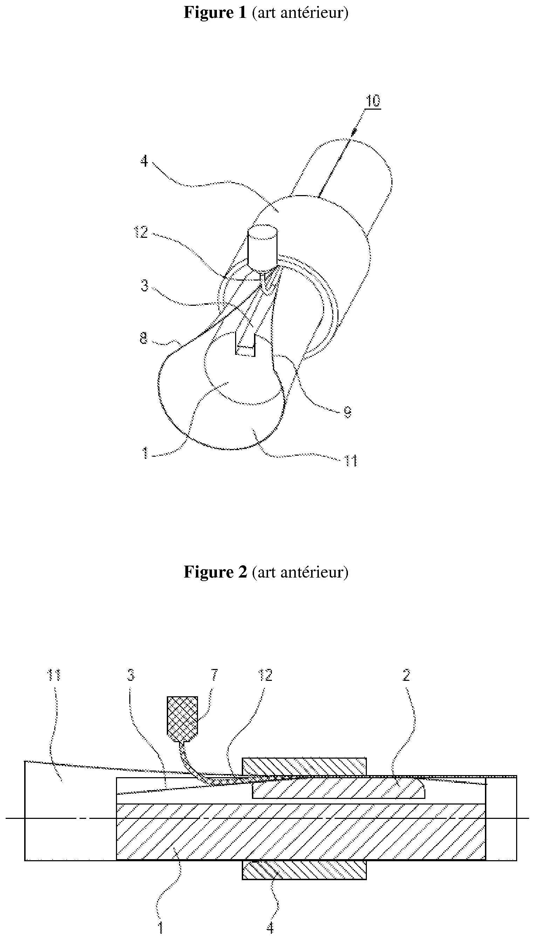

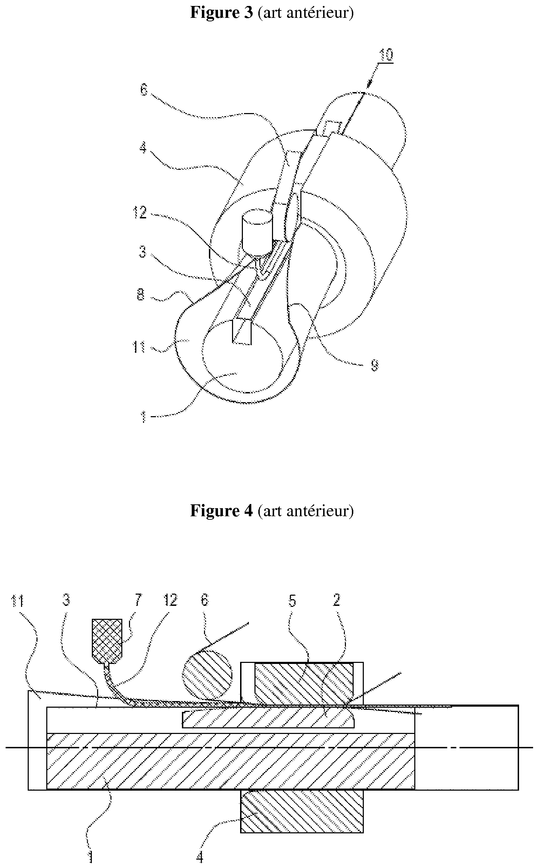

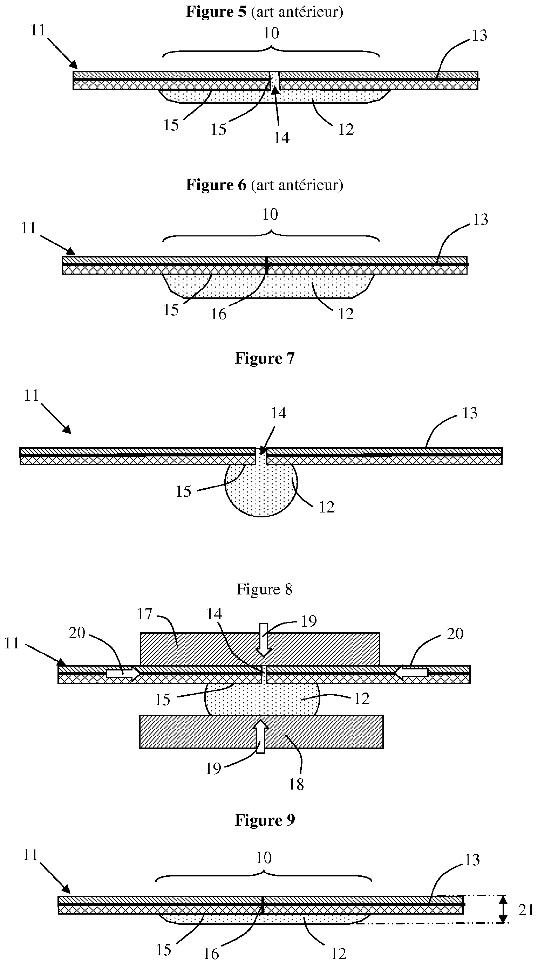

Cependant, le procédé et le dispositif décrits dans la demande de brevet WO 2008/038206 A2 présentent un certain nombre d'inconvénients relatifs aux emballages produits. Ces inconvénients sont liés à l'apparition de trois types de défauts de soudure sur les emballages. Le premier défaut est d'ordre esthétique et apparait lorsque les extrémités du laminé ne sont pas jointives. Dans ce cas le cordon de soudure est visible depuis l'extérieur de l'emballage. Une illustration de ce type de soudure est représenté figure 5. Les extrémités du laminé **11** ne sont pas jointives et l'espace **14** entre lesdites extrémités est rempli par le cordon de soudure **12**. Ce type de soudure présente un second défaut lorsque le laminé **11** comporte une couche barrière **13**. Dans la zone de soudure **10**, on observe une perte des propriétés barrières liée à la discontinuité de la couche **13**. La perte des propriétés est d'autant plus grande que l'espace **14** est grand. La perte des propriétés barrières de l'emballage est conséquente lorsque les extrémités du laminé ne sont pas jointives ou soudées de manière insuffisante. Le troisième défaut est d'ordre mécanique et apparait lorsque les extrémités sont jointives mais ne sont pas soudées entre elles. Ce type de soudure illustré figure 6 est obtenu avec les dispositifs décrits dans l'art antérieur et représentés figures1 à 4. Dans ce cas, un cordon de soudure **12** de forte épaisseur est nécessaire pour palier à la faible résistance du soudage bout à bout du laminé **11**. La zone de soudure **10** présente une première zone **15** formée par l'interface entre le cordon **12** et le laminé **11** ; et une deuxième zone **16** formée par l'interface entre les extrémités du laminé. Il est observé que les procédés et dispositifs décrits dans l'art antérieur ne permettent pas de souder l'interface **16**. La forte épaisseur du cordon de soudure **12** nuit à la flexibilité de l'emballage au niveau de la zone soudée. L'interface non soudé **16** entre les extrémités du laminé pénalise également les propriétés esthétiques et barrières de l'emballage. L'apparition des défauts précités réside dans la difficulté de faire fondre les extrémités du laminé grâce à l'énergie apportée par le cordon de soudure.

Le procédé et dispositif décrits dans la demande WO 2008/038206 A2 illustré sur les figures 1 à 4 induisent également d'autres inconvénients qui résultent notamment du fait que le cordon à l'état fondu s'écoule naturellement vers le bas sous l'action de la gravité. De ce fait, le cordon établit un contact dans un premier temps avec la surface de la tige de soudage ou, le cas échéant, la courroie d'entraînement intégrée dans la tige. Sur la figure 2 représentant une vue en coupe du dispositif illustré figure 1, le cordon de soudure **12** est déposé sur une courroie métallique **3** avant d'entrer en contact avec le laminé **11**. Ce premier contact du cordon, dont la température est relativement élevée, avec une surface métallique froide est préjudiciable au bon fonctionnement du procédé. En effet, la température du cordon est diminuée avant d'être en contact avec les bords du laminé à souder. Cette perte d'énergie accidentelle réduit sensiblement la qualité de la soudure.

La publication US 3,066,063 A décrit une méthode pour fabriquer un container tubulaire avec un joint longitudinal comprenant au moins les opérations suivantes: a. une opération d'enroulement lors de laquelle on enroule un laminé b. une opération de mise en disposition lors de laquelle on dispose les extrémités du laminé à proximité l'une de l'autre, c. une opération d'extrusion lors de laquelle on extrude et dépose sur lesdites extrémités un cordon de résine à l'état fondu,e. une opération de compression lors de laquelle on met en pression la zone de soudure,f. une opération de refroidissement lors de laquelle on refroidit la soudure.

La publication GB 1 468 256 A décrit un emballage pour liquides.

La publication DE 20 08 085 A1 décrit un procédé de fabrication de produits sous forme de tubes.

### Exposé général de l'invention

Le problème que la présente invention se propose de résoudre réside dans l'amélioration de la qualité de la soudure obtenue au moyen d'un cordon extrudé à l'état fondu. L'invention permet notamment de remédier aux inconvénients précités.

L'invention concerne en premier lieu un procédé de soudage d'un emballage en matière plastique de forme tubulaire, procédé comprenant au moins les opérations suivantes :
- une opération d'enroulement lors de laquelle on enroule un laminé,
- une opération de mise en disposition lors de laquelle on dispose les bords du laminé,
- une opération d'extrusion où l'on extrude et dépose un cordon de matière plastique à l'état fondu sur les extrémités du laminé,
- une opération de fusion pendant laquelle on fait fondre lesdites extrémités par l'intermédiaire du cordon de soudure,
- une opération de compression pendant laquelle on met en pression la zone soudée conjointement dans deux directions
- une opération de refroidissement de la zone soudée.

L'opération dite de fusion est un point clé de l'invention car elle permet de faire fondre la surface des extrémités du laminé. L'opération de fusion des extrémités du laminé est obtenue grâce à l'énergie thermique du cordon de soudure et est mise en oeuvre de sorte que :
- le cordon soit en contact unique avec les extrémités du laminé
- la durée de l'opération et l'énergie du cordon de soudure soient suffisante pour faire fondre lesdites extrémités.

L'opération dite de compression simultannée ou consécutive à l'étape de fusion consiste à :
- comprimer très rapidement le cordon de soudure selon un axe perpendiculaire au laminé,
- et conjointement presser les extrémités fondues du laminé l'une contre l'autre dans une direction parallèle au plan du laminé.

La mise en oeuvre de l'invention conduit à un procédé consistant à déplacer le cordon selon une direction parallèle aux éléments du dispositif susceptibles d'entrer en contact avec le cordon. De la sorte, le cordon est libre de tout contact avec des éléments tels que tige ou courroie avant d'entrer en contact avec le laminé.

Le procédé selon l'invention est défini par les étapes de la revendication 1 et des modes d'exécution particuliers sont définis par les revendications dépendantes 2 à 11.

Une particularité de l'invention réside dans le fait que toute l'énergie nécessaire pour effectuer la soudure provient du cordon de matière plastique.

Selon une première variante du procédé selon l'invention, le cordon est déposé préalablement à l'étape de mise en disposition.

Selon une deuxième variante, le cordon est déposé pendant l'étape de mise en disposition.

Selon une troisième variante, le cordon est déposé consécutivement à l'étape de mise en disposition.

Le cordon peut être disposé sur la surface du laminé formant la face interne de l'emballage ou sur celle formant la surface externe. Préférentiellement, le cordon est déposé sur la surface formant la face interne.

L'invention concerne également un emballage tel qu'obtenu par le procédé revendiqué.

L'invention concerne enfin un dispositif pour la mise en oeuvre d'un procédé tel que défini précédemment. Le dispositif est défini par les caractéristiques techniques de la revendication indépendante 14 et des modes d'exécution particuliers sont définis par les revendications dépendantes 15 à 18.

L'emballage comporte une zone soudée composée de deux parties distinctes :
- une première partie soudée formée par l'interface entre les extrémités bout à bout du laminé
- une deuxième partie formée par l'interface entre la face inférieure du laminé et le cordon de soudure

La soudure présente une épaisseur totale inférieure à deux fois l'épaisseur du laminé et de préférence inférieure à 1.8 fois l'épaisseur du laminé. La résistance de la zone soudée est supérieure à la résistance du laminé.

Lorsque le laminé comporte plusieurs couches l'invention est avantageuse pour améliorer la continuité des couches dans la zone soudée. Par conséquent, les propriétés barrière de ces emballages sont améliorées ainsi que l'esthétique de la zone soudée.

Une variante de l'invention consiste à utiliser le procédé pour réaliser un soudage par recouvrement des extrémités du laminé. Dans ce cas, le cordon de soudure est disposé à l'interface des extrémités du laminé destinées à se chevaucher. L'opération de fusion permet de faire fondre lesdites extrémités.

Dans le cas où le laminé comprend dans son épaisseur une couche qui ralentit la diffusion de la chaleur comme une couche d'aluminium ou une couche de papier, il peut être avantageux d'utiliser un dispositif de préchauffage des bords, par exemple par contact, ce qui a pour effet d'augmenter la température des deux bords du laminé, facilitant ou améliorant ainsi les conditions de soudage.

Selon une variante de l'invention, les bords du laminé sont coupés en biais, ce qui a pour effet d'augmenter la surface latérale de contact du laminé dans la zone de soudure. Une telle configuration permet également d'influencer la qualité et la résistance de la soudure.

Une autre variante de l'invention consiste à utiliser un cordon de matière plastique co-extrudée (avec une matière barrière au centre du cordon) pour garantir également dans la zone définie entre les bords du laminé, une bonne protection barrière avec l'environnement externe du tube.

### Exposé détaillé de l'invention

L'invention est décrite plus en détail ci-après au moyen d'exemples illustrés par les figures suivantes :
La figure 1 est une vue en perspective d'un dispositif de l'art antérieur.
La figure 2 est une coupe latérale du dispositif de la figure 1.
La figure 3 est une vue en perspective d'un deuxième dispositif de l'art antérieur.
La figure 4 est une coupe latérale du dispositif de la figure 3.
La figure 5 représente une première variante d'une soudure de l'art antérieur.
La figure 5 représente une deuxième variante d'une soudure de l'art antérieur.
Les figures 7 et 8 illustrent un procédé de soudage bout à bout selon l'invention.
La figure 7 représente l'opération de fusion du procédé.
La figure 8 représente l'opération de compression du procédé.
La figure 9 représente une soudure bout à bout selon l'invention

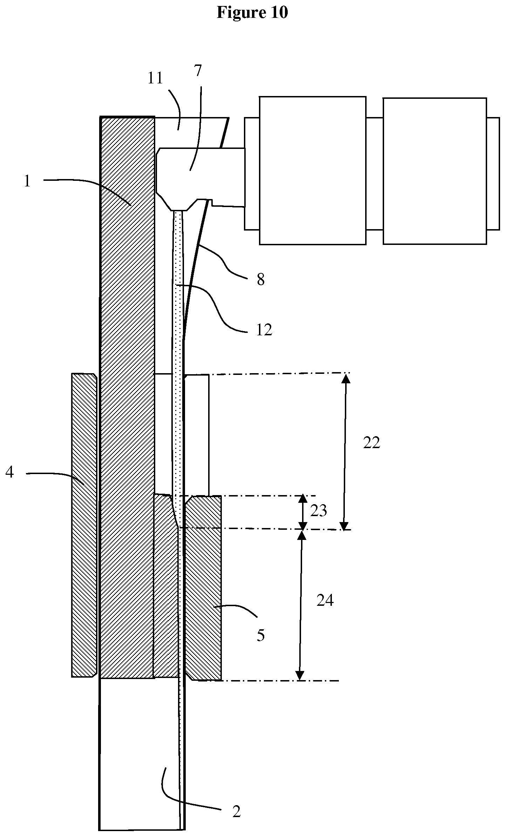

La figure 10 est une vue en coupe d'un dispositif selon l'invention.

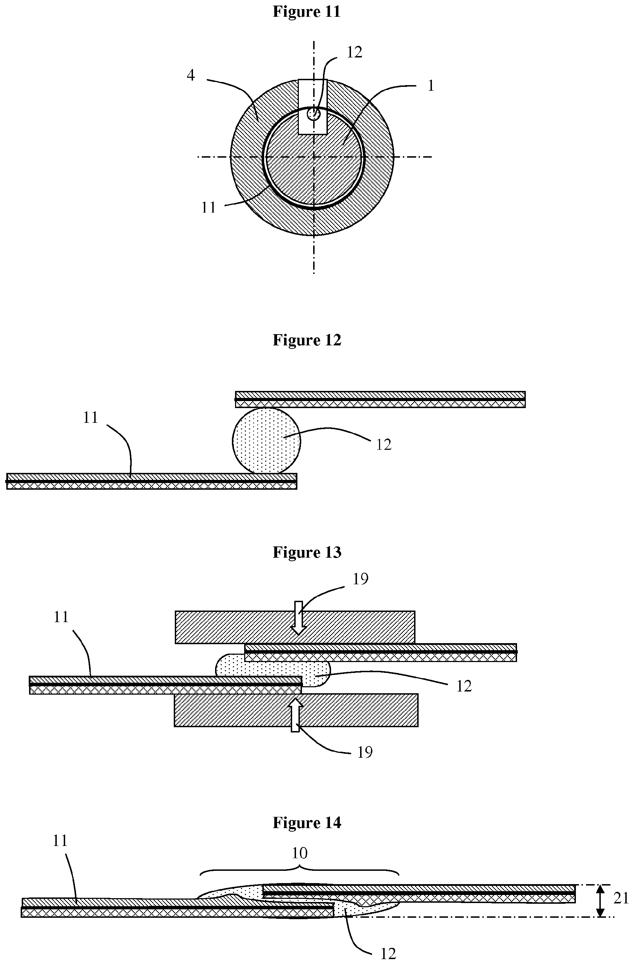

La figure 11 est une vue en coupe du dispositif au niveau de l'opération de fusion
Les figures 12 et 13 illustrent le procédé pour un soudage avec recouvrement.
La figure 12 représente l'opération de fusion.
La figure 13 représente l'opération de compression.
La figure 14 représente une soudure avec recouvrement selon l'invention.

### Liste des références numériques utilisées dans les figures 1 à 9

1. Tige de soudage
2. Matrice de calibrage (hauteur ajustable)
3. Courroie (métallique) intérieure
4. Filière de formation
5. Patin d'appui
6. Courroie extérieure
7. Tête d'extrusion
8. Premier bord de laminé
9. Deuxième bord de laminé
10. Zone de soudure
11. Laminé (bande continue)
12. Cordon de matière plastique extrudée
13. Couche barrière
14. Espace
15. Interface cordon - laminé
16. Interface laminé - laminé
17. Elément de compression externe
18. Elément de compression interne
19. Force de compression perpendiculaire à la surface du laminé
20. Force de compression parallèle à la surface du laminé
21. Epaisseur de la zone soudée
22. zone de fusion
23. zone de compression
24. zone de refroidissement

Le procédé selon l'invention consiste à utiliser l'énergie contenue dans le cordon de soudure pour :
- souder le cordon sur les extrémités du laminé,
- souder les extrémités du laminé l'une sur l'autre.

La zone soudée comporte ainsi deux parties distinctes, la première étant formée par l'interface cordon - laminé et la seconde par l'interface laminé - laminé.

Le procédé selon l'invention comporte au moins les opérations suivantes :
- Enroulement du laminé afin de former un corps tubulaire
- Disposition des extrémités du laminé
- Extrusion et dépôt d'un cordon de soudure sur lesdites extrémités
- Fusion desdites extrémités grâce à l'énergie dudit cordon
- Compression de la zone soudée
- Refroidissement de la zone soudée
- Découpe du corps tubulaire en éléments cylindriques de longueur identique.

Les étapes clés du procédé selon l'invention sont illustrées figures 7 et 8. La figure 7 illustre l'opération de fusion pendant laquelle une partie de l'énergie du cordon de soudure est transférée au laminé afin de faire fondre les extrémités à souder. Le cordon de soudure **12** extrudé à l'état fondu est mis en contact avec les extrémités du laminé **11**. L'interface **15** entre le cordon et le laminé est de surface réduite afin de chauffer seulement les extrémités à souder. Pendant l'opération dite de fusion le cordon de soudure **12** est en contact uniquement avec les extrémités du laminé **11**. Selon un mode préférentiel de réalisation de l'invention, les extrémités du laminé **11** sont uniquement en contact avec le cordon de soudure **12** pendant l'opération de fusion. L'absence de contacts extérieurs avec le cordon de soudure **12** et les extrémités du laminé pendant l'opération de fusion est un point clé de l'invention. La durée de l'opération de fusion dépend de l'épaisseur du laminé et de la température et de la masse du cordon de soudure. La durée de l'opération de fusion est généralement supérieure à 0,1 secondes et la température du cordon de soudure supérieure d'au moins 50°C à la température de fusion. On cherche généralement à réduire la masse du cordon de soudure pour diminuer l'épaisseur de la soudure ainsi que le coût de l'emballage. La masse optimale résulte d'un compromis entre l'énergie minimale que doit contenir le cordon pendant l'opération de fusion, l'épaisseur de la soudure que l'on cherche à réduire et in fine les propriétés de la zone soudée. Ces paramètres sont ajustés par l'homme du métier. Lorsque le laminé **11** est multicouche, il n'est pas toujours possible et utile de faire fondre l'ensemble des couches. Dans ce cas, l'énergie apportée par le cordon de soudure **12** est utilisé pour faire fondre les couches aptes au soudage bout à bout. Généralement la résine constituant le cordon de soudure est de même nature que les couches soudante du laminé. Il est avantageux de choisir pour le cordon de soudure **12** une résine dont la température de fusion est supérieure ou égale aux résines constituant les couches soudantes du laminé. Par exemple, l'usage d'un cordon de soudure en polyéthylène haute densité est avantageux pour la confection de tubes avec un laminé comportant des couches de polyéthylène basse densité. L'opération de fusion peut être préalable ou simultanée à l'opération de compression.

Il peut arriver que le laminé contienne dans son épaisseur des couches ralentissant le transfert de chaleur entre le cordon de soudure et les couches soudantes du laminé. Par exemple, il est observé qu'une couche d'aluminium ou une couche de papier ralenti fortement le transfert thermique. Il devient parfois difficile alors de faire fondre les couches situées de proches de la surface supérieure du laminé, le cordon de soudure se trouvant sur la surface inférieure. Pour palier à cette difficulté, l'ajout de source de chaleur sur la surface externe du laminé pendant l'opération de fusion peut être envisagé. Un chauffage de la surface supérieure par contact ou par air chaud est avantageux dans ce cas.

Successivement ou simultanément à l'opération de fusion, la zone de soudure est comprimée. L'opération de compression illustrée figure 8 consiste à :
- Réduire l'épaisseur du cordon de soudure et mettre en pression l'interface fondue **15** entre le laminé 11 et le cordon de soudure **12**,
- Réduire l'espace **14** entre les extrémités et mettre en pression l'interface 16 entre les extrémités fondues du laminé **11**.

Pendant l'opération de compression, la zone de soudure **10** est comprimée conjointement selon une direction dite perpendiculaire et une direction dite transversale. La direction perpendiculaire est orthogonale au plan formée par la zone de soudure. La direction dite transversale est parallèle au plan formé par la zone de soudure et perpendiculaire à l'axe de la soudure. La compression perpendiculaire diminue l'épaisseur du cordon de soudure **10** et augmente la cohésion de l'interface soudé entre le cordon **12** et le laminé **11**. La compression perpendiculaire est réalisée par l'intermédiaire d'un élément de compression externe **17** en contact avec la surface externe du laminé et un élément de compression interne **18** en contact avec le cordon de soudure. La force de compression **19** exercée par les éléments de compression **17** et **18** provoque la diminution de l'épaisseur du cordon de soudure ainsi que son étalement. L'opération de compression doit être très rapide pour éviter un refroidissement de la zone soudée **10** qui empêcherait l'écrasement du cordon **12** et conduirait à un interface soudé **15** entre le cordon et le laminé de mauvaise qualité. Préalablement, conjointement ou successivement à la compression perpendiculaire, la zone soudée est mise en pression transversalement sous l'effet d'une force de compression transversale **20** exercée sur le laminé. La force de compression transversale **20** produit le rapprochement des bords du laminé puis une mise en pression des bords fondus du laminé **11** au niveau de l'interface soudé **16**. Cette mise en pression transversale améliore les forces de cohésion de la soudure au niveau de l'interface **16**. Les forces de compression transversales **20** sont de faible intensité et transmises par le laminé jusqu'à l'interface **16**. La mise en pression de l'interface **16** a pour effet d'augmenter sensiblement la résistance de la zone soudée et améliore la continuité des propriétés barrière du laminé dans la zone soudée.

La figure 9 illustre une soudure bout à bout selon le procédé. La zone de soudure **10** présente deux zones soudées distinctes :
- l'interface **15** entre le cordon **12** et la face inférieure du laminé **11**,
- l'interface **16** entre les extrémités du laminé.

Contrairement aux soudures obtenues avec les procédés et dispositifs décrits dans l'art antérieur, l'interface **16** entre les extrémités du laminé **11** est soudée. La distance entre les extrémités de la couche barrière est inférieure à 60 microns et de préférence inférieure à 30 microns. Par conséquent, les propriétés de l'emballage sont améliorées à savoir:
- meilleure continuité des propriétés barrières et mécaniques au niveau de la zone soudée,
- plus faible épaisseur de la soudure.

Par rapport aux soudures de l'art antérieur, l'épaisseur **21** de la soudure peut être réduite. L'épaisseur de la soudure **21** selon l'invention est avantageusement inférieure à deux fois l'épaisseur du laminé. Préférentiellement, cette épaisseur est inférieure à 1.8 fois l'épaisseur du laminé.

La figure 10 représente un dispositif selon l'invention. Le tube est formé en continu par enveloppement progressif de la tige soudage **1** sur toute sa circonférence avec un ruban de laminé **11** tiré de haut en bas au travers de la filière de formation **4**. Le laminé **11** en PE ou PP (ou autres matières) (mono ou multicouches) est alors soudé longitudinalement par dépose d'un cordon de matière plastique extrudée à l'état fondu **12** à l'intérieur du tube. Comme on peut le voir sur la figure 10, la tige de soudage **1** est disposée verticalement. De la sorte, le cordon **12**, qui se déplace également verticalement, n'entre pas en contact avec la tige **1** mais directement avec le laminé **11**.

Le dispositif comprend une zone **22** dite de fusion pour la mise en oeuvre de l'opération de fusion du procédé. La longueur de la zone **22** est définie en fonction de l'épaisseur du laminé et de la vitesse de défilement du laminé. Dans la zone de fusion **22**, les extrémités du laminé et le cordon de soudure à l'état fondu **12** sont maintenus en contact. Le cordon **12** et les extrémités du laminé sont exempts de tout autre contact avec des éléments du dispositif dans la zone de fusion **22**.

Le dispositif comprend une zone **23** dite de compression pour la mise en oeuvre de l'opération de compression. La zone **23** est de faible longueur car l'opération de compression doit être de courte durée. Dans la zone **23**, la zone de soudure est comprimée conjointement selon une direction dite perpendiculaire et selon une direction dite transversale. La compression perpendiculaire qui comprime le cordon de soudure **12** et provoque son étalement est illustrée figure 10. La zone de soudure est comprimée entre le patin d'appui **5** exerçant une pression sur la face externe du laminé et par la matrice de calibrage **2** exerçant une pression sur le cordon de soudure. La zone de compression **23** est de faible longueur pour que l'opération de compression soit de courte durée. De nombreux moyens de compression autres que ceux illustrés figure 10 peuvent être utilisés. Des rouleaux de compressions peuvent être avantageux lorsque les résines constituant le cordon de soudure **12** ou la surface externe du laminé créent des dépôts sur les outillages de compression. Les outillages de compression sont préférablement refroidis. Une autre alternative consiste à utiliser des courroies se déplaçant à la même vitesse que le laminé et entrant en contact avec la zone soudée au moment de la compression. Cette alternative permet d'éviter les frottements entre la zone soudée et les outillages pendant les opérations de compression et refroidissement. Certains dispositifs utilisent une seule courroie disposée sur la face externe de la soudure ou interne. D'autres dispositifs disposent de deux courroies disposées de part et d'autre de la zone de soudure et entrant en contact avec ladite zone seulement au moment de l'opération de compression. Le dispositif illustré figure 10 exerce également une force de compression transversale mettant en pression les bords fondus du laminé. La compression transversale est exercée par la filière de formation **4** dont la géométrie dans la zone de compression a pour effet de mettre en légère pression les extrémités du laminé. Avantageusement, dans la zone de compression, le diamètre de la filière de formation **4** est légèrement inférieur au diamètre du corps tubulaire formé par la surface externe du laminé **11**.

Le dispositif comprend une zone **24** dite de refroidissement pour la mise en oeuvre de l'opération de refroidissement. Dans cette zone, la soudure est refroidie entre le patin d'appui **5** et la matrice de calibrage **2**. Dans la zone de refroidissement peuvent venir s'ajouter également des éléments améliorant la rondeur des tubes fabriqués. La longueur de la zone de refroidissement **24** est généralement réduite car la zone chauffée est locale. La longueur de la zone **24** est ajustée en fonction de l'épaisseur du laminé, du cordon de soudure et de la vitesse de défilement du laminé.

La figure 11 illustre une vue en coupe du dispositif au niveau de la zone de fusion **22**. La figure 11 montre que le cordon de soudure à l'état fondu **12** est en contact seulement avec les extrémités du laminé **11**. Le cordon de soudure **12** est exempt de tout contact avec la tige **1**, et la filière de formation **4**. La disposition verticale du dispositif est particulièrement intéressante pour éviter tout contact du cordon de soudure **12** avec les outillages lors de la production des corps tubulaire mais également pendant les phases de démarrage et arrêt.

Les figures 12 à 14 illustrent une variante de l'invention consistant à souder les extrémités du laminé en formant un recouvrement.

La figure 12 représente le procédé au moment de l'opération dite de fusion. Pendant l'opération de fusion le cordon de soudure **12** est disposé entre les extrémités du laminé **11** se chevauchant. Une partie de l'énergie du cordon **12** est transmises audites extrémités afin de les faire fondre.

La figure 13 représente l'opération dite de compression pendant laquelle on applique une force de compression **19** perpendiculaire à la surface du laminé. Cette force de compression a pour effet de réduire l'épaisseur du cordon **12** et recouvrir les extrémités du laminé **11.**

La figure 14 illustre une soudure avec recouvrement réalisée selon l'invention. La zone soudée **10** présente une épaisseur **21** inférieure à 2 fois l'épaisseur du laminé et préférentiellement inférieure à 1.8 fois l'épaisseur du laminé **11**. Le cordon de soudure **12** couvre la tranche du laminé au niveau des bords soudés.

L'utilisation d'un cordon de soudure co-extrudée à l'état fondu (avec une matière barrière au centre du cordon) permet d'améliorer la protection barrière au niveau de la zone de soudure.

## Revendications

1. Procédé de soudage d'un emballage en matière plastique de forme tubulaire, procédé comprenant au moins les opérations suivantes :
a. une opération d'enroulement lors de laquelle on enroule un laminé (11),
b. une opération de mise en disposition lors de laquelle on dispose les extrémités (8,9) du laminé (11) à proximité l'une de l'autre,
c. une opération d'extrusion lors de laquelle on extrude et dépose sur lesdites extrémités (8,9) un cordon de résine (12) à l'état fondu,
d. une opération de fusion lors de laquelle on fait fondre lesdites extrémités (8,9) par l'intermédiaire dudit cordon (12),
e. une opération de compression lors de laquelle on met en pression la zone de soudure (10),
f. une opération de refroidissement lors de laquelle on refroidit la soudure,
tel que lors de ladite opération d'extrusion on déplace le cordon (12) selon une direction parallèle aux éléments du dispositif qui supportent le laminé (11), de sorte à ce que le premier contact du cordon (12), une fois extrudé, se produise directement avec le laminé (11) et que l'on déplace le cordon (12) verticalement, selon la direction de la force de gravité
et en ce que l'opération de fusion est réalisée par l'énergie thermique dudit cordon, la durée de l'opération de fusion et l'énergie thermique du cordon étant suffisantes pour faire fondre lesdites extrémités (8,9) du laminé.

2. Procédé selon la revendication 1 lors duquel lesdites extrémités (8,9) sont disposées bout à bout.

3. Procédé selon la revendication 1 lors duquel lesdites extrémités (8,9) sont disposées l'une par-dessus l'autre.

4. Procédé selon l'une quelconque des revendications précédentes **caractérisé par le fait que** lors de ladite opération de fusion, le cordon (12) est en contact seulement avec lesdites extrémités (8,9).

5. Procédé selon l'une quelconque des revendications précédentes lors duquel la durée de ladite opération de fusion est supérieure à 0.1 secondes.

6. Procédé selon l'une quelconque des revendications précédentes lors duquel l'opération de fusion est réalisée conjointement par l'intermédiaire du cordon et par une deuxième source de chaleur.

7. Procédé selon l'une quelconque des revendications précédentes **caractérisé par le fait que** lors de ladite opération de compression, la zone de soudure (10) est mise en pression conjointement selon une direction perpendiculaire et une direction transversale à la direction desdites extrémités (8,9).

8. Procédé selon l'une quelconque des revendications précédentes **caractérisé par le fait que** lors de ladite opération de compression, on étale le cordon (12) et on réduit l'épaisseur de la zone de soudure (10).

9. Procédé selon l'une quelconque des revendications précédentes **caractérisé par le fait que** lors de ladite opération de compression, on presse lesdites extrémités (8,9) l'une contre l'autre.

10. Procédé selon l'une quelconque des revendications précédentes **caractérisé par le fait que** le cordon (12) est déposé pendant l'opération de mise en disposition.

11. Procédé selon l'une quelconque des revendications 1 à 10 **caractérisé par le fait que** le cordon à (12) est déposé consécutivement à l'opération de mise en disposition.

12. Emballage de forme tubulaire obtenu selon un procédé tel que défini dans l'une quelconque des revendications précédentes.

13. Emballage selon la revendication 12 **caractérisé par le fait qu'**au niveau de la soudure, son épaisseur est inférieure à deux fois l'épaisseur du laminé (11).

14. Dispositif pour la mise en oeuvre d'un procédé tel que défini dans l'une quelconque des revendications 1 à 11, comprenant des moyens (4) pour enrouler un laminé (11) sur une tige de soudage (1) et pour disposer les extrémités (8,9) du laminé (11) à proximité l'une de l'autre, ladite tige de soudage (1) étant adaptée pour être entourée par le laminé (11), des moyens (7) pour extruder et disposer un cordon de matière plastique à l'état fondu (12) entre la surface externe de la tige de soudage (1) et le laminé (11) disposé autour de ladite tige (1), une zone de compression (17,18,23) pour mettre en pression la zone de soudure et une zone de refroidissement (2,5,24) pour refroidir la soudure, **caractérisé par le fait que** la tige de soudage est disposée verticalement et par des moyens de déplacement du cordon selon une direction parallèle aux éléments du dispositif qui supportent le laminé (11) de sorte à ce que le premier contact du cordon (12) une fois extrudé se produise directement avec le laminé (11) et des moyens de contrôle de l'opération de fusion grâce auxquels la durée de l'opération de fusion et l'énergie thermique du cordon sont suffisantes pour faire fondre lesdites extrémités du laminé.

15. Dispositif selon la revendication 14 comprenant en outre une courroie de transport préchauffée (3) disposée sur la tige de soudage (1), de manière à ce que ledit cordon à l'état fondu (12) soit disposé entre ladite courroie de transport (3) et un laminé (11) entourant ladite tige(1).

16. Dispositif selon la revendication 14 ou 15 comprenant une courroie de conduite extérieure (6) et un patin d'appui (5) ajustable disposés de manière à exercer en direction de ladite tige de soudage (1) une pression sur un laminé (11) et un cordon de matière plastique à l'état fondu (12) qui seraient disposés entre ladite courroie de conduite (6) et ladite tige de soudage (1).

17. Dispositif selon l'une quelconque des revendications 14 à16 dans lequel lesdits moyens (7) pour extruder et disposer un cordon de matière plastique à l'état fondu (12) sont disposés du côté de la face supérieure de la tige de soudage (1).

18. Dispositif selon l'une quelconque des revendications 14 à 17 dans lequel lesdits moyens (7) pour extruder et disposer un cordon de matière plastique à l'état fondu (12) sont disposés du côté de la face inférieure de la tige de soudage (1).

## Patentansprüche

1. Verfahren zur Versiegelung einer rohrförmigen Kunststoffverpackung, wobei das Verfahren mindestens die folgenden Vorgänge umfasst:
a. einen Wickelvorgang, bei dem ein Laminat (11) gewickelt wird,
b. einen Anordnungsvorgang, bei dem die Enden (8, 9) des Laminats (11) in der Nähe zueinander angeordnet werden,
c. einen Extrusionsvorgang, bei dem ein Harzstrang (12) im geschmolzenen Zustand extrudiert und auf die Enden (8, 9) aufgebracht wird,
d. ein Schmelzvorgang, bei dem die Enden (8, 9) mit Hilfe des Strangs (12) geschmolzen werden,
e. einen Kompressionsvorgang, bei dem die Schweißzone (10) unter Druck gesetzt wird,
f. einen Kühlvorgang, bei dem die Schweißnaht gekühlt wird,
so dass bei dem Extrusionsvorgang der Strang (12) in eine Richtung parallel zu den Elementen der Vorrichtung, die das Laminat (11) tragen, verlagert wird, so dass der erste Kontakt des Strangs (12), wenn er extrudiert ist, direkt mit dem Laminat (11) erfolgt, und dass der Strang (12) vertikal in Richtung der Schwerkraft verlagert wird,
und dass der Schmelzvorgang durch die Wärmeenergie des Strangs erfolgt, wobei die Dauer des Schmelzvorgangs und die Wärmeenergie des Strangs ausreichend sind, um die enden (8, 9) des Laminats zum Schmelzen zu bringen.

2. Verfahren nach Anspruch 1, bei dem die Enden (8, 9) Stoß an Stoß angeordnet sind.

3. Verfahren nach Anspruch 1, bei dem die enden (8, 9) übereinander angeordnet sind.

4. Verfahren nach einem der vorhergehenden Ansprüche, **dadurch gekennzeichnet, dass** bei dem Schmelzvorgang der Strang (12) nur mit den Enden (8, 9) in Kontakt ist.

5. Verfahren nach einem der vorhergehenden Ansprüche, bei dem die Dauer des Schmelzvorgangs länger als 0,1 Sekunden ist.

6. Verfahren nach einem der vorhergehenden Ansprüche, bei dem der Schmelzvorgang gemeinsam mit Hilfe des Strangs und einer zweiten Wärmequelle durchgeführt wird.

7. Verfahren nach einem der vorhergehenden Ansprüche, **dadurch gekennzeichnet, dass** bei dem Kompressionsvorgang die Schweißzone (10) gemeinsam in eine Richtung senkrecht und in eine Richtung quer zur Richtung der Enden (8, 9) unter Druck gesetzt wird.

8. Verfahren nach einem der vorhergehenden Ansprüche, **dadurch gekennzeichnet, dass** bei dem Kompressionsvorgang der Strang (12) ausgebreitet und die Dicke der Schweißzone (10) verringert wird.

9. Verfahren nach einem der vorhergehenden Ansprüche, **dadurch gekennzeichnet, dass** bei dem Kompressionsvorgang die Enden (8, 9) aneinandergedrückt werden.

10. Verfahren nach einem der vorhergehenden Ansprüche, **dadurch gekennzeichnet, dass** der Strang (12) während des Anordnungsvorgangs angeordnet wird.

11. Verfahren nach einem der Ansprüche 1 bis 10, **dadurch gekennzeichnet, dass** der Strang (12) nach dem Anordnungsvorgang angeordnet wird.

12. Rohrförmige Verpackung, die nach dem Verfahren, wie in einem der vorhergehenden Ansprüche definiert, erhalten wird.

13. Verpackung nach Anspruch 12, **dadurch gekennzeichnet, dass** im Bereich der Schweißnaht ihre Dicke geringer als zweimal die Dicke des Laminats (11) ist.

14. Vorrichtung für den Einsatz eines Verfahrens, wie in einem der Ansprüche 1 bis 11 definiert, umfassend Mittel (4), um ein Laminat (11) auf einen Schweißstab (1) zu wickeln, und um die Enden (8, 9) des Laminats (11) in der Nähe zueinander anzuordnen, wobei der Schweißstab (1) dazu vorgesehen ist, von dem Laminat (11) umgeben zu sein, Mittel (7), um einen Kunststoffstrang im geschmolzenen Zustand (12) zu extrudieren und zwischen der Außenfläche des Schweißstabs (1) und dem Laminat (11), das um die Stange (1) angeordnet ist, anzuordnen, eine Kompressionszone (17, 18, 23), um die Schweißzone und eine Kühlzone (2, 5, 24) zum Kühlen der Schweißnaht, unter Druck zu setzen, **dadurch gekennzeichnet, dass** der Schweißstab vertikal angeordnet ist, und durch Mittel zur Verlagerung des Strangs in eine Richtung parallel zu den Elementen der Vorrichtung, die das Laminat (11) tragen, so dass der erste Kontakt des Strangs (12), wenn er extrudiert ist, direkt mit dem Laminat (11) erfolgt, und Mittel zur Kontrolle des Schmelzvorgangs, dank derer die Dauer des Schmelzvorgangs und die Wärmeenergie des Strangs ausreichend sind, um die Enden des Laminats zum Schmelzen zu bringen.

15. Vorrichtung nach Anspruch 14, ferner umfassend einen vorgewärmten Förderriemen (3), der auf dem Schweißstab (1) angeordnet ist, so dass der Strang im geschmolzenen Zustand (12) zwischen dem Förderriemen (3) und einem Laminat (11), das die Stange (1) umgibt, angeordnet ist.

16. Vorrichtung nach Anspruch 14 oder 15, umfassend einen äußeren Leitriemen (6) und eine einstellbare Stützkufe (5), die dazu vorgesehen sind, in Richtung des Schweißstabs (1) einen Druck auf ein Laminat (11) und einen Kunststoffstrang im geschmolzenen Zustand (12), die zwischen dem Leitriemen (6) und dem Schweißstab (1) angeordnet würden, auszuüben.

17. Vorrichtung nach einem der Ansprüche 14 bis 16, bei der die Mittel (7), um einen Kunststoffstrang im geschmolzenen Zustand (12) zu extrudieren und anzuordnen, auf der Seite der Oberseite des Schweißstabs (1) angeordnet sind.

18. Vorrichtung nach einem der Ansprüche 14 bis 17, bei der die Mittel (7), um einen Kunststoffstrang im geschmolzenen Zustand (12) zu extrudieren und anzuordnen, auf der Seite der Unterseite des Schweißstabs (1) angeordnet sind.

## Claims

1. Method for welding a tubular plastic container, comprising at least the following operations:
a. a winding operation in which a laminate (11) is wound,
b. a positioning operation in which the ends (8, 9) of the laminate (11) are positioned next to one another,
c. an extrusion operation in which a softened resin bead (12) is extruded and deposited on the said ends (8, 9),
d. a fusion operation in which the said ends (8, 9) are fused by means of the said bead (12),
e. a compression operation in which the weld zone (10) is compressed,
f. a cooling operation in which the weld is cooled
such that during the said extrusion operation, the bead (12) is moved in a direction parallel to the elements of the device which support the laminate (11), so that the first contact of the bead (12), once extruded, occurs directly with the laminate (11) and that the bead (12) is moved vertically in the direction of the force of gravity
and in that the welding operation is carried out by the thermal energy of the said bead, the duration of the fusion operation and the thermal energy of the bead being sufficient to melt the said ends (8, 9) of the laminate.

2. Method according to Claim 1, in which the said ends (8, 9) are positioned abutting one another.

3. Method according to Claim 1, in which the said ends (8, 9) are positioned one above the other.

4. Method according to any one of the preceding claims, **characterized in that** during the said fusion operation, the bead (12) is only in contact with the said ends (8, 9).

5. Method according to any one of the preceding claims, in which the duration of the said fusion operation is longer than 0.1 second.

6. Method according to any one of the preceding claims, in which the fusion operation is carried out jointly by means of the bead and by a second heat source.

7. Method according to any one of the preceding claims, **characterized in that** during the said compression operation, the weld zone (10) is pressed jointly along a perpendicular direction and a transverse direction to the direction of the said ends (8, 9).

8. Method according to any one of the preceding claims, **characterized in that** during the said compression operation, the bead (12) is spread and the thickness of the weld zone (10) is reduced.

9. Method according to any one of the preceding claims, **characterized in that** during the said compression operation, the said ends (8, 9) are pressed against one another.

10. Method according to any one of the preceding claims, **characterized in that** the bead (12) is deposited during the positioning operation.

11. Method according to any one of Claims 1 to 10, **characterized in that** the bead (12) is deposited following the positioning operation.

12. Tubular container obtained by a method as defined in any one of the preceding claims.

13. Container according to Claim 12, **characterized in that** at the weld, its thickness is less than twice the thickness of the laminate (11).

14. Device for carrying out a method as defined in any one of Claims 1 to 11, comprising means (4) for winding a laminate (11) on a welding rod (1) and for disposing the ends (8, 9) of the laminate (11) in proximity to one another, the said welding rod (1) being adapted to be surrounded by the laminate (11), means (7) for extruding and placing a softened plastic bead (12) between the outer surface of the welding rod (1) and the laminate (11) placed around the said rod (1), a compression zone (17, 18, 23) for pressurizing the welding zone and a cooling zone (2, 5, 24) for cooling the weld, **characterized in that** the welding rod is positioned vertically and by means for moving the bead according to a direction parallel to the elements of the device which support the laminate (11) so that the first contact of the bead (12) once extruded occurs directly with the laminate (11) and means for controlling the fusion operation by virtue of which the duration of the fusion operation and the thermal energy of the bead are sufficient to melt said ends of the laminate.

15. Device according to Claim 14, further comprising a preheated conveyor belt (3) positioned on the welding rod (1) so that the said softened bead (12) is positioned between the said conveyor belt (3) and a laminate (11) surrounding the said rod (1).

16. Device according to either of Claims 14 and 15, comprising an outer drive belt (6) and an adjustable bearing pad (5) positioned so as to apply, in the direction of the said welding rod (1), a pressure on a laminate (11) and a softened plastic bead (12) which are positioned between the said drive belt (6) and the said welding rod (1).

17. Device according to any one of Claims 14 to 16, in which the said means (7) for extruding and positioning a softened plastic bead (12) are placed on the side of the upper face of the welding rod (1).

18. Device according to any one of Claims 14 to 17, in which the said means (7) for extruding and positioning a softened plastic bead (12) are placed on the side of the lower face of the welding rod (1).
